(19) Europäisches Patentamt

European Patent Office

Office européen des brevets

(11) EP 4 764 272 A1

(12) EUROPEAN PATENT APPLICATION

(43) Date of publication:
24.06.2026 Bulletin 2026/26

(21) Application number: 24222440.0

(22) Date of filing: 20.12.2024

(51) International Patent Classification (IPC):
F16K 3/26 (2006.01)    F16K 3/314 (2006.01)
F16K 3/32 (2006.01)    F16K 3/34 (2006.01)
F16K 11/07 (2006.01)    F16K 27/04 (2006.01)
F16K 31/02 (2006.01)    F16K 3/24 (2006.01)

(52) Cooperative Patent Classification (CPC):
F16K 3/314; F16K 3/24; F16K 3/34; F16K 11/0708;
F16K 11/0716; F16K 27/041

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: ESBE AB
333 75 Reftele (SE)

(72) Inventors:
• ELEBO, Joi
334 33 Anderstorp (SE)
• HALLBERG, Henrik
333 73 Bredaryd (SE)

(74) Representative: AWA Sweden AB
Matrosgatan 1
Box 5117
200 71 Malmö (SE)

(54) A VALVE DEVICE

(57) The present disclosure relates to a valve device (10) comprising: a valve housing (15); a first fluid opening (11); an additional fluid opening (12, 13); a valve bore (14) having an axial extent (A1) along an axial direction; and a plunger disposed within the valve bore (14) and movable along the axial direction. The plunger is movable at least between a first position and a second position, wherein in the first position the additional fluid opening (12, 13) is closed, wherein in the second position the additional fluid opening (12, 13) is open, wherein the plunger comprises a first sealing portion and the valve bore (14) comprises a second sealing portion, wherein in the first position, the first and second sealing portions engages such to form a seal extending 360° as seen in a perimeter direction of the valve bore (14), and wherein in the second position, the first and second sealing portions are completely disengaged. The valve device (10) is configured to, during an opening phase of the additional fluid opening, during which the plunger is moved from the first position, along the axial direction, in a direction towards the second position, gradually disengage the first and second sealing portions. The present disclosure further relates to use of such valve device for diverting and/or controlling a fluid flowing in a heating and/or cooling system.

Fig. 1

**Description**

Technical field

The present disclosure relates to a valve device, in particular a valve device for use in a heating system, a cooling system, a potable water system, a combined heating and/or cooling system, etc. The present disclosure further relates to use of such valve device.

Background

Systems providing a heated or cooled fluid from a source being distributed to the user side via two partial circuits, e.g., heat exchangers, are common in the art. To control supply to the user side in such systems, two control valves are typically used, where respective partial circuit is associated with a single such control valve. These control valves may be of two-way type for controlling the flow through one partial circuit and thereby control the heating or cooling supply to the user side.

Systems with two sources may be provided. In systems with two sources, one source may be dedicated for cooling and the other for heating meaning that only one of these is active at a time. Should one of the valves be closed in systems with two sources, heating or cooling is prevented to be delivered from one of the sources.

Systems with two user circuits may be provided. Should one of the valves be closed in systems with two user circuits, heat or cooling may be prevented to be delivered to one of the two user circuits.

In systems with two user circuits where the available heat from the source is often scarce, and the supply to a respective user side is limited, a so-called priority function may be exploited, thereby allowing a single valve to be open at a time.

Based on at least the above, it is desirable to provide a valve that simplifies heat priority and/or switch between heating and cooling in terms of number of components, installation, and maintenance, both in systems as exemplified above, and other systems.

In regard to these aspects, EP 4 202 270 A discloses an improved multi-port valve assembly, which for example can be used in a heating or cooling system. A single such valve assembly can function as two conventional two-way valves.

However, it is further desirable to provide an improved valve device with improved flow rate control and/or which can provide desirable flow characteristics. Furthermore, it is desirable that the valve device is relativley simple in manufacturing.

Summary

Thus, it is an object of the present disclosure to provide an improved valve device, more specifically to provide a valve device with improved flow rate control and/or which enables establishing a desirable flow characteristics.

The invention is defined by the appended independent claims. Embodiments are set forth in the appended dependent claims and in the following description and drawings.

According to a first aspect, there is provided a valve device comprising: a valve housing; a first fluid opening; an additional fluid opening; a valve bore having an axial extent along an axial direction; and a plunger disposed within the valve bore and movable along the axial direction. The plunger is movable at least between a first position and a second position, wherein in the first position the additional fluid opening is closed. In the second position the additional fluid opening is open. The plunger comprises a first sealing portion and the valve bore comprises a second sealing portion. In the first position, the first and second sealing portions engages such to form a seal extending 360° as seen in a perimeter direction of the valve bore. In the second position, the first and second sealing portions are completely disengaged. The valve device is configured to, during an opening phase of the additional fluid opening, during which the plunger is moved from the first position, along the axial direction, in a direction towards the second position, gradually disengage the first and second sealing portions.

By "an axial direction" is meant a direction substantially parallel to the axial extent of the valve bore. Thus, reference to an axial movement implies a movement being substantially parallel to the axial extent of the valve bore if not explicitly stated otherwise.

The "perimeter direction" can be seen as a circumferential direction.

The fluid opening may be a liquid fluid opening.

A fluid opening can be considered "closed" when a fluid used with the valve device is not allowed to flow through said opening.

A fluid opening can be considered "open" when said fluid is allowed to flow through said opening.

The fluid may be a liquid suitable for use in a piping of a heating and/or cooling system. Such a liquid may for example be water or any adequate equivalent. Thus, a fluid opening can be considered "closed" when no liquid is allowed to flow through said opening. A fluid opeing can be considered "open" when a liquid is allowed through said opening. Depending on the position of the plunger, a fluid opening can be partially open, meaning that a partial flow is allowed to flow through the opening, or fully open, meaning that a full flow is allowed to flow through the opening. For example, when the axial position of an end of the plunger is aligned with a central axis of an additional fluid opening, a partial flow can be seen to be allowed to flow from the first fluid opening to and through the additional fluid opening. Thus, when the plunger is positioned such that fluid is at least partly passed around the plunger and through the additional fluid opening, the additional fluid opening can be seen as partially open. When the additional fluid opening is seen as fully open, the plunger may be positioned such to not impede the fluid flow between the first fluid opening and the additional fluid opening, or alternativley such to have a minimal impact on the fluid flow between the first fluid opening and the additional fluid opening. When the additional fluid opening is seen as fully open, the plunger may be located in an end plunger position.

By "opening phase" is meant a period of time wherein the plunger is moved along the axial direction to open an additional fluid opening. In the case the valve device comprises multiple additional fluid openings, one additional fluid opening may be opened while another additional fluid opening is closed. Thus, the opening phase refers to the opening of at least one fluid opening of the valve. It does not exclude that another opening or other openings of the valve device are closed during said opening phase.

Thus, when the opening phase starts, the first and second sealing portions can be seen to engage with another along the whole perimeter direction of the valve bore. Further, during the opening phase, the first and second sealing portions can be seen to gradually disengage from one another such that the first and second sealing portions are only partly engaged along said perimeter direction of the valve bore. The gradual disengagement may be performed during at least a part of the opening phase. Thus, the graudal disengagement may be performed during a part of the opening phase, preferably a major part of the opening phase, or during the whole opening phase. Further, when the opening phase ends, the first and second sealing portions can be seen to be completely disengaged, i.e. disengaged along the whole perimeter direction of the valve bore.

Consequently, the disengagement between the first and second sealing portions are not performed such that the seal is released all the way around the perimeter simultenously, but is instead performed gradually, as seen when the plunger is moved along the axial direction. I.e., during the opening phase, when the plunger is moved along the axial direction to open an additional fluid opening, the first and second sealing portions goes from being engaged along the whole perimeter direction of the valve bore, i.e. 360°, to gradually disengage along the perimeter direction such that in the end of the opening phase being completely disengaged from one another.

Thus, the valve device can be configured such to move the plunger from the first position to at least one intermediate position, the intermediate position being located between the first and second position, as seen in the axial direction. In the intermediate position, the first and second sealing portions can be seen to be partially disengaged. I.e. in the intermediate position, the first and second sealing portions can be engaged along more than 0° and less than 360° along the perimeter direction. Consequently, the valve device may be configured to, during an opening phase of the additional fluid opening, move the plunger from the first position towards the second position, along the axial direction, thereby passing a plurality of intermediate positions, said intermediate positions being located axially between said first and second positions, wherein in each of said intermediate positions, the first and second sealing portions are partially disengaged.

In other words, the valve device can be configured such to partially open up a space between the plunger and the valve bore, when the plunger is moved into an intermediate position located between the first and second position. By partially open up a space between the plunger and the valve bore, a fluid can be allowed to flow partially around the plunger.

The first sealing portion can comprise a first sealing surface. The second sealing portion can comprise a second sealing surface. The first and second sealing surfaces can be adapted to cooperate with one another to form a seal.

As one example, the plunger may comprise a first sealing element representing said first sealing portion. Thus, the first sealing portion may be a sealing element, such as a soft sealing element. As another example, the first sealing portion may be an end portion of the plunger, more particularly an outer wall end portion of the plunger. Thus, the first sealing surface may be an outer surface of an end portion of the plunger. The outer surface of the plunger being a surface of the plunger configured to face the valve bore.

As one example, the valve bore may comprise a second sealing element representing said second sealing portion. Thus, the second sealing portion may be a sealing element, such as a soft sealing element. As another example, the second sealing portion may be a portion of the valve bore, more particularly an inner wall portion of the valve bore. Thus, the second sealing surface may be an inner surface of the valve bore. The inner surface of the valve bore being a surface of the valve bore configured to face the plunger.

The second sealing portion may extend between a first and a second end of the second sealing portion, as seen along the axial direction of the valve bore. The first end of the second sealing portion may be located at an axial position corresponding to an axial position wherein the valve bore transitions into an additional fluid opening. For example, the first end of the second sealing portion may correspond to a transition between an asymmetrical recess and a fluid opening recess of the valve device. The second end of the second sealing portion may be located anywhere between said first end of the second sealing portion and an end of a plunger space of the valve bore, preferably the end of the plunger space of the valve bore being located closest to said additional fluid opening.

The valve device may be for use in a heating system, a cooling system, a potable water system, a combined heating and/or cooling system, etc.

The valve device may be a two-way valve. Thus, said additional fluid opening may be a second fluid opening. Alternatively, the valve device may be a multi-port valve. For example, the valve device may be a three-way valve or a four-way valve. Thus, the valve device may comprise a plurality of additional fluid openings, such as for example a second, a third and/or fourth fluid opening. Although the present disclosure provides examples of the valve device being a two-way valve or a three-way valve, the skilled person appreciates that the valve device may have more than two or three fluid openings.

The valve device may be used for diverting or mixing a fluid flowing in a heating and/or cooling system. Thus, the valve device may be seen as a diverting valve or a mixing valve.

At least one end of the plunger may be open. Thus, a fluid can be allowed to flow between an interior and an exterior side of the plunger. A fluid may be allowed to flow inside of the plunger.

The plunger may be movable between a first end plunger position and a second end plunger position, as seen along the axial direction of the valve bore.

The first and second end plunger positions may correspond to axially opposite end positions of the plunger in the valve bore. Thus, the first end plunger position may refer to when a first end of the plunger is in contact, or relatively close to be in contact, with a first end portion of the valve bore. The first end of the plunger may be seen as a bottom end of the plunger. The first end portion of the valve bore may be seen as a bottom portion of the valve bore. Further, the second end plunger position may refer to when a second end, opposite to the first end, of the plunger is in contact, or relatively close to be in contact, with a second end portion, opposite to the first end portion, of the valve bore. The second end of the plunger may be seen as a top end of the plunger. The second end portion of the valve bore may be seen as a top portion of the valve bore.

For a two-way valve device, the plunger may be located such to close a flow path of the valve device, when in the first end plunger position. The flow path being a flow path between a first fluid opening and a second fluid opening of the two-way valve. When in the second end plunger position, the plunger may be located such to provide a fully open flow path.

For a multi-port valve device, such as a three-way valve device, the plunger may be located such to provide a fully open first flow path, when in the second end plunger position. The first flow path being a flow path between a first fluid opening and a second fluid opening of the multi-port valve device. When in the first end plunger position, the plunger may be located such to provide an open second flow path. The second flow path being a flow path between the first fluid opening and a third fluid opening of the multi-port valve device. The first and second flow paths of the multi-port valve device may be closed when the plunger is in a position located between the first and second end plunger positions.

A valve device according to the above enables flow rate control. Furthermore, the valve device enables establishing a desirable flow characteristics.

One of said first and second sealing portions may be provided by a sealing element, preferably a soft sealing element.

The sealing element may be formed of any adequate elastic material, such as rubber. The sealing element may for example be provided in form of a flat ring or an O-ring.

Thus, the plunger and/or valve bore may comprise a sealing element, such as a soft sealing element. A first sealing element of the plunger may represent said first sealing portion. Alternatively, or additionally, a second sealing element of the valve bore may represent said second sealing portion. As one example, the plunger may comprise a first sealing element for sealing against a sealing surface of the valve bore. As another example, the valve bore may comprises a second sealing element for sealing against a sealing surface of the plunger.

The first sealing portion may be provided at an end portion of the plunger. For example, the first sealing portion may be provided as an outer wall end portion of the plunger. As another example, a first sealing element may be provided at an end portion of the plunger

Thus, at least one end portion of the plunger may comprise a sealing element for sealing against the valve bore. The sealing element provided at an end portion of the plunger may seal against the inner wall portion of the valve bore. Both a first and an opposite second end portion of the plunger may be provided with one or more sealing elements.

According to a first group of embodiments, the valve bore may comprise at least one asymmetrical recess extending 180-360° as seen in a perimeter direction of the valve bore, preferably 225-360°, 270-360° or 315-360°, more preferably 330-360°, 340-360° or 350-360° as seen in a perimeter direction of the valve bore. Thus, according to one example, the at least one asymmetrical recess may extend 360° as seen in a perimeter direction of the valve bore.

By "asymmetrical recess" is meant a recess that lack symmetry along the perimeter direction. Thus, the recess may vary in size and/or shape.

The recess may be asymmetrical in the sense that the recess presents a varying axial extent, as seen along the perimeter direction. The axial extent of the recess being the extent of the recess as seen in an axial direction of the valve bore. Alternatively, or additionally, the recess may present a varying radial extent, as seen along the perimeter direction. The radial extent of the recess being substantially perpendicular to the axial extent of the recess.

The asymmetrical recess can be arranged at an inner wall portion of the valve bore. Thus, the valve bore can been seen to comprise an inner wall portion comprising said at least on asymmetrical recess. The inner wall portion can surround a plunger space presenting a cross sectional area. The inner wall portion can extend along the axial direction, perpendicular to the cross sectional area, between a first and a second axially spaced apart end of the valve bore.

A plurality of asymmetrical recesses may be provided. For example, a first and a second asymmetrical recess may be provided. The number $N_{AR}$ of asymmetrical recesses may be equal to the number $N_{FO}$ of fluid openings minus 1, i.e.:

$$N_{AR} = N_{FO} - 1 \qquad (Equation\ 1).$$

The asymmetrical recess enables flow rate control. Furthermore, the asymmetrical recess enables establishing a desirable flow characteristics.

The at least one asymmetrical recess may comprises said second sealing portion. For example, the at least one asymmetrical recess may comprise a sealing element for sealing against the plunger, the sealing element representing said second sealing portion. The sealing element may be a soft sealing element. The sealing element may be formed of any adequate elastic material, such as rubber. The sealing element may for example be provided in form of a flat ring or an O-ring.

Alternatively, the second sealing portion may comprise said at least one asymmetrical recess. For example, the second sealing portion may be an inner wall portion of the valve bore comprising said at least one asymmetrical recess.

The asymmetrical recess may be provided as a recess having an axial extent, as seen in the axial direction, wherein the axial extent of the asymmetrical recess varies along the perimeter direction.

Thus, the asymmetrical recess extending along the perimeter may present a non-constant axial extent. The axial extent of the asymmetrical recess may for example be 0.02-5 mm, 0.05-4 mm, 0.1-3 mm, 0.3-2 mm or 0.5-1 mm.

The asymmetrical recess may have a radial extent that varies along the perimeter direction.

Thus, the asymmetrical recess extending along the perimeter may present a non-constant radial extent. The radial extent of the asymmetrical recess may for example be 0.01-2 mm, 0.03-1 mm, 0.05-0.75 mm, 0.07-0.5 mm or 0.1-0.3 mm. The radial extent may be seen as a radial depth. I.e. the at least one asymmetrical recess may present a depth, as seen in a radial direction substantially perpendicular to the axial direction.

The asymmetrical recess may comprise at least a first portion presenting a first axial extent, as seen in the axial direction, and a second portion presenting a second axial extent, as seen in the axial direction, wherein the first portion of the asymmetrical recess is arranged closer to the additional fluid opening than the second portion of the asymmetrical recess. The first axial extent of the first portion may be greater than the second axial extent of the second portion.

A largest axial extent of the asymmetrical recess may be at least 1.1 times as large as a smallest axial extent of the asymmetrical recess, preferably at least 1.3, at least 1.5 or at least 1.7 times as large.

As one example, the largest axial extent of the asymmetrical recess may be 2-10 times or 3-5 times as large as the smallest axial extent of the asymmetrical recess. A largest axial extent of the asymmetrical recess may be 0.5-5 mm, preferably 0.75-4 mm, 1-3 mm or 1.5-2 mm.

According to a second group of embodiments, the plunger may comprise at least one oblique end.

The oblique end enables flow rate control. Furthermore, the oblique end enables establishing a desirable flow characteristics.

The plunger may extend between a first and a second axially spaced apart end of the plunger. At least one of said first and second ends of the plunger may be oblique. The end may be oblique in the sense that a normal vector to a plane that coincides with said end presents an angle in relation to the axial direction. At least one end of the plunger may be open.

Thus, a plane that coincides with said oblique end may have a normal vector that presents an angle in relation to the axial direction. The angle may be 0.5-40° or 1-35°, preferably 2-30°, more preferably 3-25°, 4-20°, 5-15° or 2-10°.

The plunger may substantially have the form of a cylinder, in particular a right cylinder, wherein at least one base of the cylinder has been cut off by an intersecting plane. The intersecting plane can be seen as non-parallell to said base. The intersecting plane can have a normal vector that presents an angle in relation to the axial direction. The angle may be 0.5-40° or 1-35°, preferably 2-30°, more preferably 3-25°, 4-20°, 5-15° or 2-10°. Thus, the plunger comprises at least one oblique end.

The plunger may substantially have the shape of a truncated cylinder.

The valve bore of a valve device as described above (both the first and second group of embodiments) may comprises at least one fluid opening recess extending 360° as seen in a perimeter direction of the valve bore.

The fluid opening recess may be symmetrical. I.e the fluid opening recess may present a symmetry along the perimeter direction. Thus, the fluid opening recess may present substantially the same size and shape along the perimeter direction.

The fluid opening recess may present a fluid opening recess axial extent, as seen in the axial direction. The axial extent of the fluid opening recess may be the same or essentially the same along the perimeter direction, i.e. the fluid opening recess axial extent may be constant along the whole perimeter. The fluid opening recess axial extent may be 1-15 mm, preferably 2-12 mm, more preferably 3-11 mm, 4-10 mm or 6-8 mm. According to one example the fluid opening recess axial extent may be around 7 mm.

Further, the fluid opening recess may present a depth, as seen in a radial direction substantially perpendicular to the axial direction, i.e. the at least one fluid opening recess may present a radial depth. The radial depth of the fluid opening recess may be 0.5-8 mm, preferably 1-7 mm, more preferably 2-6 mm or 3-5 mm. According to one example the radial depth of the fluid opening recess may be around 4 mm.

The fluid opening recess can be arranged at the inner wall portion of the valve bore. Thus, the valve bore may be seen to comprise an inner wall portion comprising said at least on asymmetrical recess and said fluid opening recess.

A plurality of fluid opening recesses may be provided. For example, a first and a second fluid opening recess may be provided. The number $N_{FOR}$ of fluid opening recesses may be equal to the number $N_{FO}$ of fluid openings minus 1, i.e.:

$$N_{FOR} = N_{FO} - 1 \qquad (Equation\ 2).$$

In other words, the number $N_{FOR}$ of fluid opening recesses may be equal to the number $N_{AR}$ of asymmetrical recesses, i.e.:

$$N_{FOR} = N_{AR} \qquad (Equation\ 3).$$

The fluid opening recess may merge with a fluid opening.

Thus, a cross sectional area of the valve bore, as seen at a plane extending substantially perpendicular to the axial direction of the valve bore and extending through a centre point of a fluid opening, may be larger than a cross sectional area of the valve bore at an end portion of the valve bore, as seen at a plane extending substantially perpendicular to the axial direction of the valve bore at said end portion. Thereby, when in use, a free space can be seen to be formed between the inner wall portion of the valve bore and the plunger, as seen when the plunger is located in such position that a fluid opening is at least partially open. Thus, the fluid may flow in the free space, around the plunger.

For example, a first fluid opening recess may merge with a second fluid opening of the valve device. Thus, a cross sectional area of the valve bore, as seen at a plane extending substantially perpendicular to the axial direction of the valve bore and extending through a centre point of the second fluid opening, may be larger than a cross sectional area of the valve bore at an end portion of the valve bore, as seen at a plane extending substantially perpendicular to the axial direction of the valve bore at said end portion. Further, in case of at least three fluid openings, a second fluid opening recess may merge with a third fluid opening of the valve device. Thus, a cross sectional area of the valve bore, as seen at a plane extending substantially perpendicular to the axial direction of the valve bore and extending through a centre point of the third fluid opening, may be larger than a cross sectional area of the valve bore at an end portion of the valve bore, as seen at a plane extending substantially perpendicular to the axial direction of the valve bore at said end portion.

A first cross sectional area of the valve bore at the first end portion of the valve bore, may be equal or substantially the same as a second cross sectional area of the valve bore at the second end portion. Thus, the cross sectional area at the first end of the valve bore may be equal or substantially the same as the cross sectional area at the second end of the valve bore.

The valve bore may comprises at least one fluid opening recess extending 360° as seen in a perimeter direction of the valve bore, and wherein the asymmetrical recess merges with the fluid opening recess.

Consequently, the valve bore can comprise an inner wall portion comprising an asymmetrical recess merging with a fluid opening recess, which can be a symmetrical recess. Thus, the valve bore can comprise an inner wall portion comprising an asymmetrical recess merging with a symmetrical recess. The asymmetrical recess may be located closer to an end portion of the valve bore than the fluid opening recess. In case of multiple asymmetrical recesses, the first asymmetrical recess may merge with the first fluid opening recess. Further, the second asymmetrical recess may merge with the second fluid opening recess. The first asymmetrical recess may be located closer to the first end of the valve bore than the first fluid opening recess. The second asymmetrical recess may be located closer to the second end of the valve bore than the second fluid opening recess.

According to one embodiment, the valve device may comprise a second fluid opening and a third fluid opening, wherein the plunger, while being axially situated in a fluid flow preventing position being a position between a first and a second end plunger position, prevents a fluid to flow in a first flow path and in a second flow path. The first flow path being a flow path between the first fluid opening and the second fluid opening, and the second flow path being a flow path between the first fluid opening and the third fluid opening.

Thus, as one example, the valve device may comprise two additional fluid openings provided as a second fluid opening and a third fluid opening.

According to a second aspect, there is provided a valve device comprising: a valve housing; a first fluid opening; an additional fluid opening; a valve bore having an axial extent along an axial direction; and a plunger disposed within the valve bore and movable along the axial direction, wherein the valve bore comprises at least one asymmetrical recess extending 180-360° as seen in a perimeter direction of the valve bore, preferably 225-360°, 270-360° or 315-360°, more preferably 330-360°, 340-360° or 350-360° as seen in a perimeter direction of the valve bore. The valve device according to the second aspect may be designed and/or configured essentially the same as described above in relation to the first aspect. For example, the valve housing, the fluid openings, the valve bore, the plunger and the at least on asymmetrical recess may be designed and/or configured the same or essentially the same as described above in relation to the first group of embodiments of the first aspect.

According to a third aspect, there is provided a valve device comprising: a valve housing; a first fluid opening; an additional fluid opening; a valve bore having an axial extent along an axial direction; and a plunger disposed within the valve bore and movable along the axial direction, wherein the plunger comprises at least one oblique end.

The valve device according to the third aspect may be designed and/or configured essentially the same as described above in relation to the first aspect. For example, the valve housing, the fluid openings, the valve bore, the plunger and the oblique end of the plunger may be designed and/or configured the same or essentially the same as described above in relation to the second group of embodiments of the first aspect.

According to a fourth aspect, the inventive concept refers to the use of a valve device as described in relation to the first, second or third aspect above for diverting, mixing, and/or controlling a fluid flowing in a heating and/or cooling system.

Brief Description of the Drawings

Embodiments of the present solution will now be described, by way of example, with reference to the accompanying schematic drawings in which:

Fig. 1 is a schematic view of one embodiment of a valve device, said valve device comprising three fluid openings.
Fig. 2 is a cross-sectional view of the valve device of Fig. 1.
Figs 3a-3f illustrate different axial positions of the plunger of a valve device comprising three fluid openings. Figs 3b-3e illustrate one example of an opening phase of the second fluid opening.
Figs 4a-4b illustrate a valve device wherein the plunger comprises two sealing elements.
Figs 4c-4d illustrate a valve device wherein the valve bore comprises a sealing element.
Fig. 5 illustrates another embodiment of a valve device, said valve device comprising two fluid openings.
Figs 6a-6e illustrate different axial positions of the plunger of a valve device comprising two fluid openings. Figs 6a-6c illustrate one example of an opening phase of the second fluid opening.
Figs 7a-7d illustrates yet another group of embodiments of a valve device, wherein the plunger comprises an oblique end. Figs 7a-7b illustrate a valve device wherein the plunger comprises two sealing elements. Figs 7c-7d illustrate a valve device wherein the valve bore comprises two sealing elements.

Fig. 8 illustrates a plunger comprising an oblique end.

Detailed Description

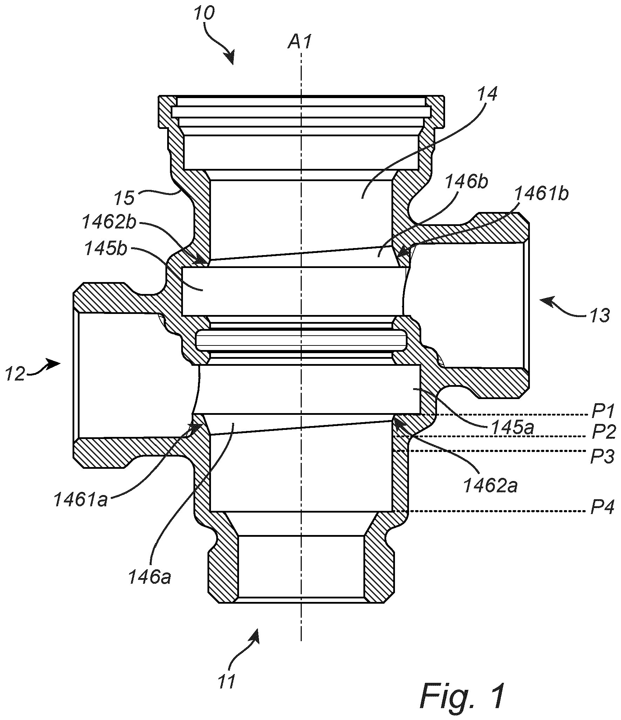

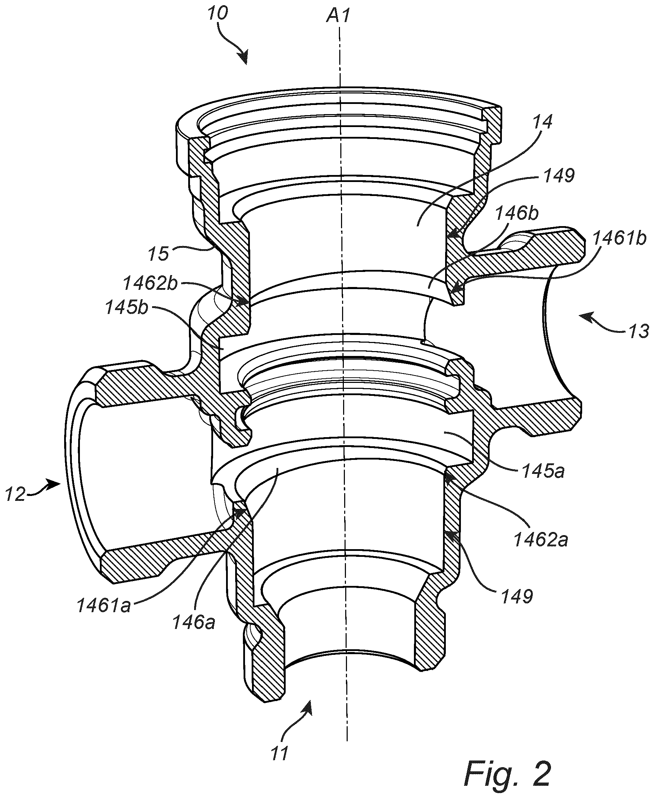

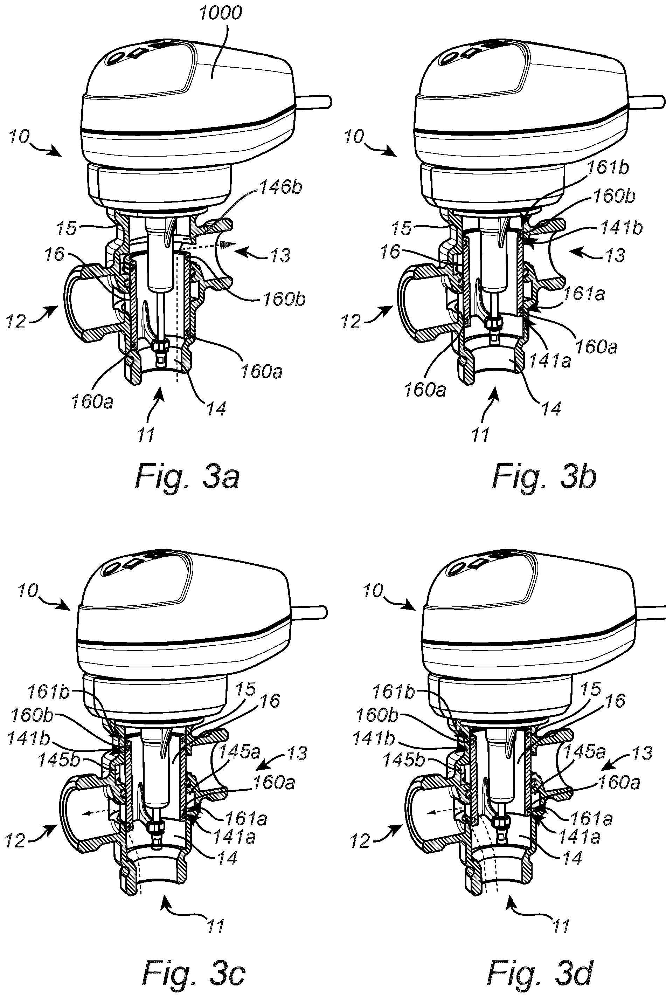

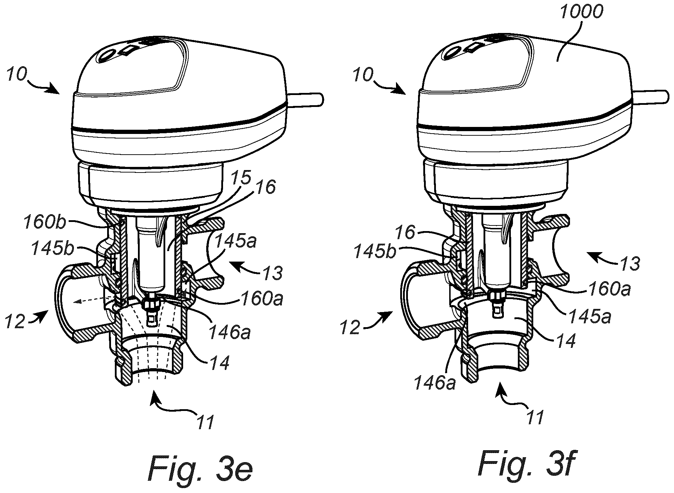

With reference to Figs 1-4 a first group of embodiments of a valve device will be described.

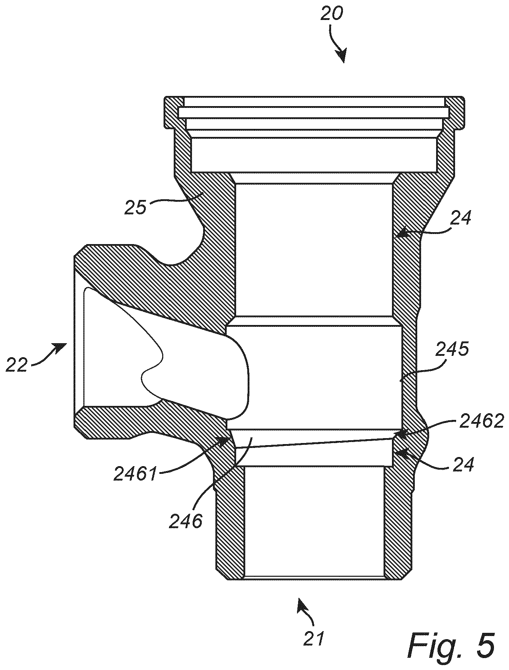

Figs 1-4 illustrate a valve device 10 in form of a multi-port valve comprising three fluid openings 11, 12, 13. As illustrated in Figs 1-4, the valve device 10 can comprise a first fluid opening 11, a second fluid opening 12 and a third fluid opening 13. The second and third fluid openings 12, 13 may be referred to as additional fluid openings, being additional fluid openings in relation to the first fluid opening. However, it is understood that other embodiments are possible wherein the valve device comprises less than three fluid openings, such as for example two fluid openings, see for example Figs 5-6, or more than three fluid openings (not illustrated). The first fluid opening 11 may be an inlet. The second fluid opening 12 may be a first outlet. The third fluid opening 13 may be a second outlet. Alternatively, the first fluid opening 11 may be a fluid outlet. The second fluid opening 12 may be a first fluid inlet. The third fluid opening 13 may be a second fluid inlet.
As illustrated in Figs 1-4, the valve device 10 comprises a housing 15. The housing 15 may be formed of a durable material, such as for example steel, brass, composite, iron, or any compound thereof.
Further, as illustrated in Figs 1-4, the valve device 10 comprises a valve bore 14. The valve bore 14 can be seen to have an axial extent A1 along an axial direction. The valve bore 14 may have a substantially cylindrical geometry. The valve bore can been seen to comprise an inner wall portion 149, see Fig. 2. The inner wall portion 149 can surround a plunger space presenting a cross sectional area. The inner wall portion 149 can extend along the axial direction, perpendicular to the cross sectional area, between a first and a second axially spaced apart end of the valve bore 14.
Further, the valve device 10 comprises a plunger 16, see Figs 3-4. Figs 1-2 mainly illustrate the valve housing 15, the fluid openings 11, 12, 13 and valve bore 14. Thus, Figs 1-2 illustrate the valve device without said plunger 16. The plunger 16 may be formed of a durable material such as for example brass, steel, or the like. The plunger 16 may have a complementary surface geometry to be radially securely situated in the valve bore while still being movable along the axial extension. A substantially cylindrical geometry may facilitate manufacturing of the valve device. As illustrated in Figs 3a-3f, at least one end of the plunger 16 may be open. Thus, the plunger may comprise a first open end and/or a second axially opposite open end. Alternatively, or additionally, the plunger 16 may comprise a through-going opening (not illustrated) arranged in a sidewall of the plunger, wherein said through-going opening extends, at least partially, along a circumferential direction of the plunger. Consequently, a fluid can be allowed to flow between an interior and an exterior side of the plunger 16. A fluid may be allowed to flow inside of the plunger 16.

The plunger 16 is configured to be disposed within the valve bore 14. The plunger 16 is configured to be movable along the axial direction. The plunger 16 is configured to be movable at least between a first position and a second position. For example, the plunger 16 can be movable between a position wherein the second fluid opening 12 is closed, to another position, wherein the second fluid opening 12 is open, such as partially open or fully open. Further, the plunger 16 can be movable between a position wherein the third fluid opening 13 is closed, to another position, wherein the third fluid opening 13 is open, such as partially open or fully open. Further, the plunger 16 may be movable between a first end plunger position and a second end plunger position, as seen along the axial direction of the valve bore 14. The first and second end plunger positions may correspond to axially opposite end positions of the plunger 16 in the valve bore 14. Thus, the first end plunger position may refer to when a first end of the plunger is in contact, or relatively close to be in contact, with a first end portion of the valve bore 14, see Fig. 3a. The first end of the plunger 16 may be seen as a bottom end of the plunger 16. The first end portion of the valve bore 14 may be seen as a bottom portion of the valve bore 14. Further, the second end plunger position may refer to when a second end, opposite to the first end, of the plunger is in contact, or relatively close to be in contact, with a second end portion, opposite to the first end portion, of the valve bore 14, see Fig. 3f. The second end of the plunger 16 may be seen as a top end of the plunger 16. The second end portion of the valve bore 14 may be seen as a top portion of the valve bore 14.

As illustrated in Figs 1-4, in particular see Figs 1-2, the valve bore 14 may comprise at least one asymmetrical recess 146a, 146b. The valve device 10 as illustrated in Figs 1-4 comprises two asymmetrical recesses, provided as a first asymmetrical recess 146a and a second asymmetrical recess 146b. However, it is understood that other embodiments are possible, such that the valve device 10 may comprise one or a plurality of asymmetrical recesses. The number of asymmetrical recesses of the valve device may vary depending on the number of fluid openings. The number $N_{AR}$ of asymmetrical recesses may be equal to the number $N_{FO}$ of fluid openings minus 1 (one). The number of of asymmetrical recesses may correspond to the number of outlet fluid openings or the number of inlet fluid openings of the valve device.

As illustrated in Figs 1-4, the at least one asymmetrical recess can be seen to extend 360° as seen in a perimeter direction of the valve bore 14. However, although not illustrated, other configurations are also possible. For example, the at least one asymmetrical recess may extend 180° or more. Thus, the at least one asymmetrical recess may extend 180-360° as seen in a perimeter direction of the valve bore, preferably 225-360°, 270-360° or 315-360°, more preferably 330-360°, 340-360° or 350-360°. According to some examples, the the at least one asymmetrical recess may extend 180-200°, 200-220°, 220-240°, 240-260°, 260-280°, 280-300°, 300-320°, 320-340° or 340-360°.

As illustrated in Figs 1-2, the first asymmetrical recess 146a may be arranged in connection with the second fluid opening 12. Thus, the first asymmetrical recess 146 may be adjoining the second fluid opening 12. Further, as also illustrated in Figs 1-2, the second asymmetrical recess 146b may be arranged in connection with the third fluid opening 13. Thus, the second asymmetrical recess 146b may be adjoining the third fluid opening 13.

Each asymmetrical recess may present an axial extent, as seen in the axial direction. The axial extent of at least one of the asymmetrical recesses 146a, 146b can vary along the perimeter direction, see Fig. 2. The axial extent of at least one of the asymmetrical recesses 146a, 146b may for example be 0.02-5 mm, 0.05-4 mm, 0.1-3 mm, 0.3-2 mm or 0.5-1 mm.

As illustrated in Fig. 2, the first asymmetrical recess 146a may comprise a first portion 1461a presenting a first axial extent, as seen in the axial direction. Further, the first asymmetrical recess 146a may comprise a second portion 1462a presenting a second axial extent, as seen in the axial direction. As illustrated in Fig. 2, the first portion 1461a of the first asymmetrical recess 146a may be arranged closer to the second fluid opening 12 than the second portion 1462a of the first asymmetrical recess 146a. The first axial extent of the first portion 1461a may be greater than the second axial extent of the second portion 1462a.

Further, as illustrated in Fig. 2, the second asymmetrical recess 146b may comprise a first portion 1461b presenting a first axial extent, as seen in the axial direction. Further, the second asymmetrical recess 146b may comprise a second portion 1462b presenting a second axial extent, as seen in the axial direction. As illustrated in Fig. 2, the first portion 1461b of the second asymmetrical recess 146b may be arranged closer to the third fluid opening 13 than the second portion 1462b of the second asymmetrical recess 146b. The first axial extent of the first portion 1461b may be greater than the second axial extent of the second portion 1462b. The first axial extent of the respective first portion 1461a, 1461b may represent the largest axial extent of the respective asymmetrical recess 146a, 146b. The axial extent of at least one of the asymmetrical recesses 146a, 146b, as measued at the first portion 1461a, 1461b may be about 0.5-5 mm, preferably about 0.75-4 mm, 1-3 mm or 1.5-2 mm. The second axial extent of the respective second portion 1462a, 1462b may represent the smallest axial extent of each asymmetrical recess.

Consequently, each asymmetrical recess 146a, 146b, may comprise a first portion repesenting the greatest axial extent of the asymmetrical recess 146a, 146b and a second portion representing the smallest axial extent. For at least one of the asymmetrical recesses 146a, 146b, said first and second portions of each asymmetrical recess may be located opposite to one another, as seen along the perimeter direction of the valve bore.

Thus, as measured starting from a first point repesenting the greatest axial extent of the asymmetrical recess 146a, 146b to a second point representing the smallest axial extent of said asymmetrical recess 146a, 146b, said asymmetrical recess may extend 180° as seen in a perimeter direction of the valve bore.

As illustrated in Fig. 2, starting from a first point of the first asymmetrical recess 146a, said first point being located in connection to the second fluid opening 12 such that a central axis through said first point extends through said fluid opening 12, the axial extent of the first asymmetrical recess 146a can be seen to decrease along 180° of the perimeter direction, as seen when starting from said first point and moving along the perimeter direction of the valve bore. In similar, the axial extent of the second asymmetrical recess 146b can be seen to decrease along 180° of the perimeter direction, as seen when starting from a first point being located in connection to the third fluid opening 13 such that a central axis through said first point extends through said fluid opening 13, and moving along the perimeter direction of the valve bore.

A largest axial extent of the first asymmetrical recess 146a may be at least 1.1 times as large as a smallest axial extent of the first asymmetrical recess 146a, preferably at least 1.3, at least 1.5 or at least 1.7 times as large. Alternatively, or additionally, a largest axial extent of the second asymmetrical recess 146b may be at least 1.1 times as large as a smallest axial extent of the second asymmetrical recess 146b, preferably at least 1.3, at least 1.5 or at least 1.7 times as large. As one example, the largest axial extent of at least one of the asymmetrical recesses 146a, 146b may be 2-10 times or 3-5 times as large as the smallest axial extent of said at least one asymmetrical recess 146a, 146b.

Further, each asymmetrical recess may present a radial extent, as seen in a radial direction substantially perpendicular to the axial direction. The radial extent of at least one of the asymmetrical recesses 146a, 146b may vary along the perimeter direction. The radial extent of at least one of the asymmetrical recesses 146a, 146b may for example be 0.01-2 mm, 0.03-1 mm, 0.05-0.75 mm, 0.07-0.5 mm or 0.1-0.3 mm.

The asymmetrical recess may be formed by a cutting operation, such as milling or turning.

Further, the valve bore 14 may comprises at least one fluid opening recess 145a, 145b. The valve device 10 as illustrated in Figs 1-4 comprises two fluid opening recesses, provided as a first fluid opening recess 145a and a second fluid opening recess 145b. However, it is understood that the number of fluid opening recesses of the valve device may vary depending on the number of fluid openings. The number $N_{FOR}$ of fluid opening recesses may be equal to the number $N_{FO}$ of fluid openings minus 1 (one). The number of of fluid opening recesses may correspond to the number of outlet fluid openings or the number of inlet fluid openings of the valve device. The at least one fluid opening recess 145a, 145b can be seen to extend 360° as seen in a perimeter direction of the valve bore 14.

The first fluid opening recess 145a may be located on a corresponding axial position as the second fluid opening 12. For example, the first fluid opening recess 145a may be located on at least partially the same axial position as the second fluid opening 12. Further, the second fluid opening recess 145b may be located on a corresponding axial position as the third fluid opening 13. For example, the second fluid opening recess 145b may be located on at least partially the same axial position as the third fluid opening 13. The at least one fluid opening recess 145a, 145b can be seen to form a valve bore chamber. Thereby, when in use, a space can be formed between the valve bore 14 and the plunger 16, as seen when the plunger 16 is located in such position that a fluid opening 12, 13 is at least partially open. Thus, the fluid may flow in the space, around the plunger 16.

The at least one asymmetrical recess 146a, 146b may be arranged adjacent to the at least one fluid opening recess 145a, 145b. Thus, the first asymmetrical recess 146a may be arranged adjacent to the first fluid opening recess 145a. Alternatively, or additionally, the second asymmetrical recess 146b may be arranged adjacent to the second fluid opening recess 145b.

Thus, the at least one asymmetrical recess 146a, 146b may merge with the at least one fluid opening recess 145a, 145b. For example, the first asymmetrical recess 146a may merge with the first fluid opening recess 145a, see Fig. 2. Alternatively, or additionally, the second asymmetrical recess 146b may merge with the second fluid opening recess 145b.

The at least one fluid opening recess 145a, 145b may present substantially the same size and shape along the perimeter direction. Each of the fluid opening recesses 145a, 145b may present a fluid opening recess axial extent, as seen in the axial direction. The axial extent of each fluid opening recess 145a, 145b may be the same or essentialy the same along the perimeter direction. The fluid opening recess axial extent of at least one of the fluid opening recesses 145a, 145b may be about 1-15 mm, preferably about 2-12 mm, more preferably about 3-11 mm, 4-10 mm or 6-8 mm. According to one example the fluid opening recess axial extent of at least one of the fluid opening recesses 145a, 145b may be about 7 mm. Further, each of the the fluid opening recesses 145a, 145b may present a depth, as seen in a radial direction substantially perpendicular to the axial direction. The radial depth of at least one of the fluid opening recesses 145a, 145b may be about 0.5-8 mm, preferably about 1-7 mm, more preferably about 2-6 mm or 3-5 mm. According to one example the radial depth of the fluid opening recess may be about 4 mm.

Although Figs 1-4 illustrate a valve device with fluid opening recesses 145a, 145b arranged in connection with the second and third fluid openings 12, 13 it shall be noted that other embodiments are possible. For example, the inner wall portion of the valve bore 14 on the opposite side of at least one of the second and third fluid openings 12, 13 may be aligned with the plunger 16. The inner wall portion of the valve bore 14 on the opposite side of at least one of the second and third fluid openings 12, 13 may be aligned with the plunger 16 such that no valve bore chamber is formed. Consequently, at least one of the second and third fluid openings 12, 13 of the valve device as illustrated and described above in relation to Figs 1-4 may be provided without a fluid opening recess.

Further, the plunger 16 may comprise at least one first sealing portion 161a, 161b. The valve bore 14 may comprise at least one second sealing portion 141a, 141b. The first sealing portion 161a, 161b can comprise a first sealing surface. The second sealing portion 141a, 141b can comprise a second sealing surface. The first and second sealing surfaces can be adapted to cooperate with one another to form a seal. The plunger 16 may comprise several first sealing portions, each adapted to cooperate with at least one respective second sealing portion of the valve bore 14.

According to one example, each second sealing portion may be a respective portion of the valve bore, more particularly a respective inner wall portion of the valve bore.

The second sealing portion may be seen to extend between a first and a second end of the second sealing portion, as seen along the axial direction of the valve bore. For example, as illustrated in Fig. 1, a first end of the second sealing portion of the valve bore, associated with the second fluid opening 12, may be located at an axial position P1 corresponding to an axial position wherein the valve bore transitions into the second fluid opening 12. For example, the first end of the second sealing portion may correspond to the transition between the asymmetrical recess 146a and the fluid opening recess 145a of the valve device, see Fig. 1. The second, opposite end of the second sealing portion may be located anywhere between said first end of the second sealing portion and an end of a plunger space of the valve bore, located at an axial position P4. For example, the second end of the second sealing portion may be located at an axial position P3, being any axial position located between axial position P4 and the asymmetrical recess 146a. As another example, the second end of the second sealing portion may be located at an axial position P2 corresponding to a transition to an axial end position of the asymmetrical recess 146a. Consequently, an axial extent of the second sealing portion may at least correspond to the axial extent of the asymmetrical recess. The axial extent of the second sealing portion may be larger than the axial extent of the asymmetrical recess.

As illustrated in Figs 3a-3f, the plunger 16 may comprise two first sealing portions 161a, 161b, each adapted to cooperate with at least one respective second sealing portion 141a, 141b of the valve bore 14.

As illustrated in Figs 3a-3f, each first sealing portion 161a, 161b of the plunger may be provided by a respective sealing element 160a, 160b. Each sealing element 160a, 160b may be provided in form of a respective soft sealing element. For example, the sealing element 160a, 160b may be formed of any adequate elastic material, such as rubber. The sealing element 160a, 160b may for example be provided in form of a flat ring or an O-ring. The sealing element 160a, 160b may be be circumferentially arranged on an exterior surface of the plunger 16. The sealing element 160a, 160b may be at least partly arranged in a recess located at an exterior surface of the plunger 16. Further, as illustrated in Figs 3a-3f, each second sealing portion 141a, 141b may correspond to a respective portion of an inner surface of the valve bore 14. Thus, a sealing element of the plunger may be adapted to cooperate with an inner surface of the valve bore, such to form a seal. As illustrated in for example Fig. 3b, the first sealing element 160a of the plunger may be adapted to cooperate with a first inner surface of the valve bore 14, such to form a seal. Further, as illustrated in Fig. 3b, the second sealing element 160b of the plunger may be adapted to cooperate with a second inner surface of the valve bore, such to form another seal. Further, as the plunger 16 is moved along the axial direction, the first sealing element 160a may be adapted to cooperate with another inner surface of the valve bore 14, being different from said first inner surface of the valve bore 14. Thus, the first sealing element 160a of the plunger may be adapted to cooperate with one or several sealing surfaces of the valve bore, when in use.

Although Figs 3a-3f illustrate one possible embodiment of providing a seal between the plunger and the valve bore, when in a closed position of the valve device, it is understood that other alternatives are also possible.

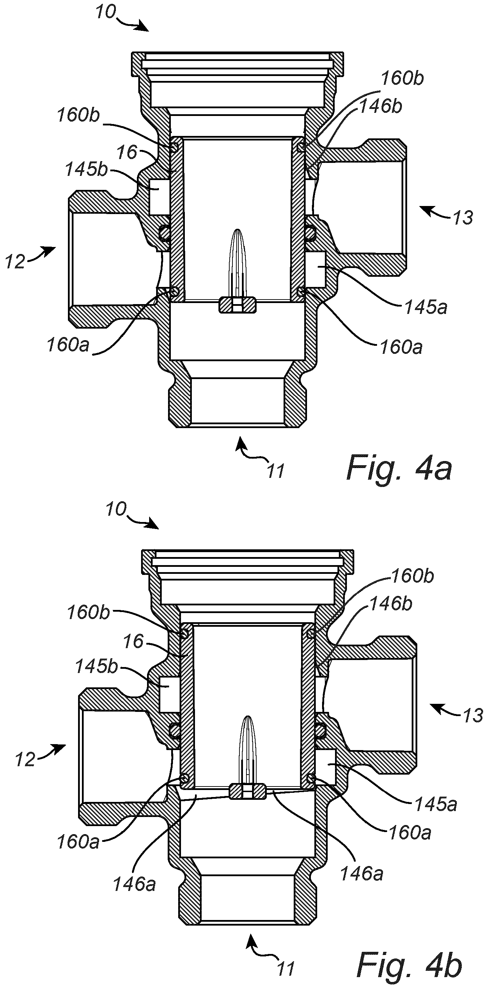

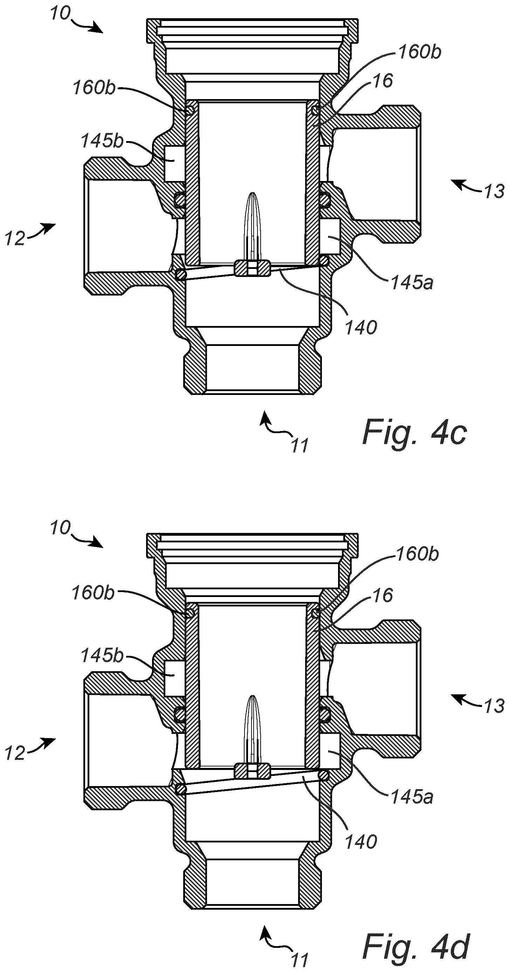

As illustrated in Figs 3a-3f and Figs 4a-4b, the plunger 16 may comprise a plurality of sealing elements 160a, 160b. For example, the plunger may comprise a sealing element 160b circumferentially arranged on an exterior of the plunger 16 in proximity to a top end of the plunger 16. Further, the plunger 16 may comprise a sealing element 160a circumferentially arranged on an exterior of the plunger 16 in proximity to a bottom end of the plunger 16. Thus, at least one of the respective end portions of the plunger 16 may be provided with a first sealing portion.

Alternatively, as illustrated in Figs 4c-4d, the valve bore may comprise at least one sealing element 140. The sealing element 140 of the valve bore may be provided in form of a soft sealing element. For example, the sealing element 140 may be formed of any adequate elastic material, such as rubber. The sealing element 140 may for example be provided in form of a flat ring or an O-ring. As illustrated in Figs 4c-4d, the sealing element 140 may be at least partly arranged in said first asymmetrical recess 146a. Thus, a sealing element 140 of the valve bore 14, preferably arranged at an asymmetrical recess, may be adapted to cooperate with an exterior surface of the plunger 16, such to form a seal. As also illustrated in Figs 4c-4d, the plunger 16 may comprise a sealing element 160b. The sealing element 160b may be adapted to cooperate with an inner surface of the valve bore 14, such to form a seal, in the same or similar way as described in relation to Figs 3a-3f and Figs 4a-4b.

Further, according to yet another example (not illustrated), a plurality or all of the asymmetrical recesses 146a, 146b of the valve bore 14 may be provided with a sealing element 140, preferably a soft sealing element.

Further, as illustrated in Figs 3a-3f, the valve device 10 may further comprise an actuator 1000. The actuator 1000 may be an electronically controlled linear actuator. Further, a translator may be provided. Said translator may be aligned along the axial extent of the valve bore. The translator may be operably connected to the actuator and the plunger. A movement of the translator along the axial direction may thereby generate a movement of the plunger along the axial direction.

In relation to Figs 3a-3f, an opening phase of the second fluid opening 12 will now be described. Thus, each of Figs 3a-3f disclose different axial positions of the plunger 16 within the valve bore 14.

Fig. 3a illustrates a first end plunger position of the plunger 16. As illustrated, when the plunger 16 is located in such first end plunger position, the second fluid opening 12 can be closed. Fig. 3f illustrates a second end plunger position of the plunger 16. As illustrated, when the plunger 16 is located in such second end plunger position, the second fluid opening 12 can be fully open. I.e. although not illustrated in Fig. 3f, it is understood that a fluid can be allowed to flow through the second fluid opening 12.

When in the axial position of the plunger 16, as illustrated in Fig. 3a, the first sealing element 160a can be seen to engage with an inner surface of the valve bore 14 such to form a seal. Said seal extending 360° as seen in a perimeter direction of the valve bore 14. Thus, as illustrated in Fig. 3a, a 360°-seal can be provided by the sealing element 160a of the plunger 16 engaging with an inner surface of the valve bore 14. However, as described above, it is understood that other embodiments are possible in order to provide the 360°-seal.

Fig. 3b illustrates yet another axial position of the plunger 16 wherein the first sealing element 160a can be seen to engage with an inner surface of the valve bore 14 such to form a 360°-seal. The position as illustrated in Fig. 3b can correspond to a first position of the plunger 16, wherein the first sealing portion 161a of the plunger 16, provided by the first sealing element 160a, and the second sealing portion 141a of the valve bore 14 engage such to form a seal extending 360° as seen in a perimeter direction of the valve bore 14. As illustrated in Fig. 3b, in such first position, the second fluid opening 12 can be closed. The position as illustrated in Fig. 3e can correspond to a second position of the plunger 16, wherein the first sealing portion 161a of the plunger 16, provided by the first sealing element 160a, and the second sealing portion 141a of the valve bore 14 are completely disengaged.

An opening phase of the second fluid opening 12 may be seen to be initiated when the plunger 16 moves away from said first position, for example as illustrated in Fig. 3b, thereby allowing a flow through the second fluid opening. The opening phase of the second fluid opening 12 may be seen to end when the plunger reaches the said second position, i.e. when the first and second sealing portions are completely disengaged, for example as illustrated in Fig. 3e. When the first and second sealing portions are completely disengaged, the second fluid opening 12 is at least partially open. As illustrated in Fig. 3e, the second fluid opening 12 can be seen to be partially open. Thus, the first sealing portion 161a and the second sealing portion 141a may be completely disengaged before the second fluid opening 12 is fully open.

The valve device 10, as illustrated in Figs 1-4, is configured such that during an opening phase of a fluid opening of the valve device 10, the first and second sealing portions associated with said fluid opening, are configured to gradually disengage. Fig. 3c illustrates an intermediate axial position of the plunger 16, located between said first position and said second position of the plunger, wherein in the intermediate position, the first and second sealing portions 141a, 161a are partially disengaged, more specifically less than 50 % disengaged, as seen along the perimeter direction. Fig. 3d illustrates yet another intermediate axial position of the plunger 16, located between said first position and said second position of the plunger, wherein the first and second sealing portions 141a, 161a are partially disengaged, more specifically more than 50 % disengaged, as seen along the perimeter direction.

Consequently, during at least part of the the opening phase of the second fluid opening 12, the first sealing portion 161a and the second sealing portion 141a can be gradually disengaged from one another. In other words, during at least part of the opening phase of the second fluid opening 12, the first sealing portion 161a and the second sealing portion 141a can be partially engaged along the perimeter direction of the valve bore 14. For example, when the plunger 16 is located at an intermediate axial position, between the first and second axial positions, the first sealing portion 161a and the second sealing portion 141a may be engaged less than 360° along the perimeter direction of the valve bore, and more than 0° along the perimeter direction. Thus, when a first portion of the first sealing portion 161a and the second sealing portion 141a have been partially disengaged from one another, a partial flow can be allowed through the second fluid opening 12. Thereafter, as the plunger 16 is moved along the axial direction, towards the second axial position, the first sealing portion 161a and the second sealing portion 141a may continue to disengage from one another gradually until being completely disengaged.

It is understood that a plurality of different axial positions of the plunger 16 may correspond to a position wherein the second fluid opening 12 is closed. Thus, there may be several axial positions of the plunger 16, wherein the first and second sealing portions engage such to form a seal extending 360° as seen in a perimeter direction of the valve bore. For example, any axial position of the plunger 16, located between the axial positions of the plunger 16 as illustrated in Fig. 3a an Fig. 3b can be seen as a position wherein the first and second sealing portions engage such to form a seal extending 360° as seen in a perimeter direction of the valve bore, i.e. a position wherein the second fluid opening 12 is closed.

The opening of the third fluid opening 13 may be configured essentially the same as what has been described above in relation to the opening of the second fluid opening 12. Thus, a corresponding opening phase may be provided for the third fluid opening 13. As illustrated in Figs 3a-3f, the plunger 16 may comprise a first open end and a second axially opposite open end. Thus, a fluid may be allowed to flow inside of the plunger 16. Consequently, when referring to an opening phase of the third fluid opening 13, the axial position as illustrated in Fig. 3b may be considered a first axial position of the plunger 16, wherein the third fluid opening 13 is closed. As illustrated in Fig. 3b, the first sealing portion 161b and the second sealing portion 141b can engage 360° along the perimeter direction of the valve bore. Starting from such position, as disclosed in Fig. 3b, the plunger 16 may then be moved in a downward direction, i.e towards the position of the plunger 16 as illustrated in Fig. 3a. Fig. 3a illustrates a position of the plunger wherein the first sealing portion 161b and the second sealing portion 141b associated with the third fluid opening 13 are completely disengaged. As illustrated in Fig. 3a, the third fluid opening 13 can be seen to be open. As the plunger 16 is moved from a first axial position, as for example illustrated in Fig. 3b, towards a second axial position, wherein the first sealing portion 161b and the second sealing portion 141b are completely disengaged, the first and second sealing portions 141b, 161b may gradually disengage from one another.

Further, the location of the plunger 16 as illustrated in Fig. 3b, may represent a fluid flow preventing position. I.e. a position wherein the plunger is situated such to prevent a fluid to flow in a first flow path and prevent the fluid to flow in a second flow path. The first flow path being a flow path between the first fluid opening 11 and the second fluid opening 12. The second flow path being a flow path between the first fluid opening 11 and the third fluid opening 13.

With reference to Figs 5-6 a second group of embodiments of a valve device will now be described. Figs 5-6 illustrate a valve device 20 in form of a two-way valve comprising two fluid openings 21, 22. As illustrated in Figs 5-6, the valve device 20 can comprise a first fluid opening 21 and a second fluid opening 22. The second fluid opening 22 may be referred to as an additional fluid opening, being an additional fluid opening in relation to the first fluid opening. The first fluid opening 21 may be an inlet. The second fluid opening 22 may be an outlet. Alternatively, the first fluid opening 21 may be a fluid outlet and the second fluid opening 22 may be a fluid inlet.

As illustrated in Figs 5-6, the valve device 20 comprises a housing 25. The housing 25 may be formed of a durable material, such as for example steel, brass, composite, iron, or any compound thereof.

Further, as illustrated in Figs 5-6, the valve device 20 comprises a valve bore 24. The valve bore 24 can be seen to have an axial extent A1 along an axial direction. The valve bore 24 may have a substantially cylindrical geometry. The valve bore can been seen to comprise an inner wall portion. The inner wall portion can surround a plunger space presenting a cross sectional area. The inner wall portion can extend along the axial direction, perpendicular to the cross sectional area, between a first and a second axially spaced apart end of the valve bore 24.

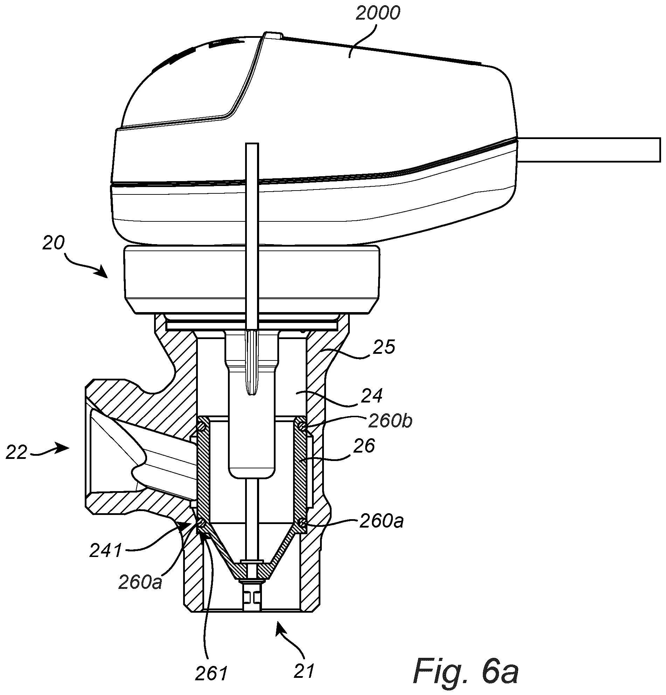

Further, the valve device 20 comprises a plunger 26, see Figs 6a-6e. Fig. 5 mainly illustrates the valve housing 25, the fluid openings 21, 22, and the valve bore 24. Thus, Fig. 5 illustrates the valve device without said plunger 26. The plunger 26 may be formed of a durable material such as for example brass, steel, or the like. The plunger 26 may have a complementary surface geometry to be radially securely situated in the valve bore while still being movable along the axial extension. A substantially cylindrical geometry may facilitate manufacturing of the valve device.

Fig. 6a-6e illustrate one embodiment of a plunger 26. However, it is understood that other design, shape and/or sizes ar possible. For example, at least one end of the plunger may be open. Thus, the plunger may comprise a first open end and/or a second axially opposite open end. Alternatively, or additionally, the plunger may comprise a through-going opening (not illustrated) arranged in a sidewall of the plunger, wherein said through-going opening extends, at least partially, along a circumferential direction of the plunger. Consequently, a fluid may be allowed to flow between an interior and an exterior side of the plunger. A fluid may be allowed to flow inside of the plunger.

The plunger 26 as illustrated in Figs 6a-6e is configured to be disposed within the valve bore 24. The plunger 26 is configured to be movable along the axial direction. The plunger 26 is configured to be movable at least between a first position and a second position. For example, the plunger 26 can be movable between a position wherein the second fluid opening 22 is closed, to another position, wherein the second fluid opening 22 is open. Further, the plunger 26 may be movable between a first end plunger position and a second end plunger position, as seen along the axial direction of the valve bore 24.

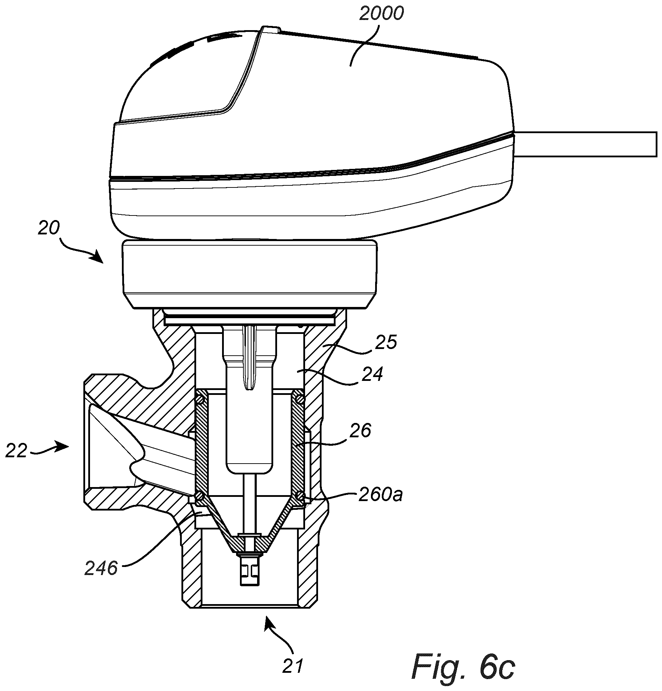

As illustrated in Figs 5-6, in particular see Fig. 5 and Figs 6c-6e, the valve bore 24 may comprise an asymmetrical recess 246. The asymmetrical recess may be designed and/or configured the same or essentially the same as described above in relation to Figs 1-4. For example, in similar to what has been described above in relation to Figs 1-4, the asymmetrical recess 246 may comprise a first portion 2461 presenting a first axial extent, as seen in the axial direction. Further, the asymmetrical recess 246 may comprise a second portion 2462 presenting a second axial extent, as seen in the axial direction.

Further, as illustrated in Figs 5-6, in particular see Fig. 5 and Figs 6c-6e, the valve bore 24 may comprise a fluid opening recess 245. The fluid opening recess 245 may be designed and/or configured the same or essentially the same as described above in relation to Figs 1-4. Alternatively, the fluid opening recess 245 may be designed and/or configured differently. The fluid opening recess 245 is optional. Thus, the inner wall portion of the valve bore 24 on the opposite side of the second fluid opening 22 may be aligned with the plunger 26 such that no valve bore chamber is formed.

Further, the plunger 26 may comprise at least one first sealing portion 261. The valve bore 24 may comprise at least one second sealing portion 241. The first sealing portion 261 can comprise a first sealing surface. The second sealing portion 241 can comprise a second sealing surface. The first and second sealing surfaces can be adapted to cooperate with one another to form a seal. The plunger 26 may comprise several first sealing portions, each adapted to cooperate with at least one respective second sealing portion of the valve bore 24. The at least one first sealing portion 261 may be designed and/or configured the same or essentially the same as described above in relation to Figs 1-4. The at least one second sealing portion 241 may be designed and/or configured the same or essentially the same as described above in relation to Figs 1-4.

As illustrated in Figs 6a-6e, the plunger 26 may comprise a plurality of sealing elements 260a, 260b, such as for example soft sealing elements. For example, the plunger may comprise a sealing element 260b circumferentially arranged on an exterior of the plunger 26 in proximity to a top end of the plunger 26. Further, the plunger 26 may comprise a sealing element 260a circumferentially arranged on an exterior of the plunger 26 in proximity to a bottom end of the plunger 26. Thus, at least one of the respective end portions of the plunger 26 may be provided with a first sealing portion. The sealing elements 260a, 260b may be designed and/or configured the same or essentially the same as described above in relation to Figs 1-4. For example, a first sealing element 260a of the plunger 26 may be adapted to cooperate with a first inner surface of the valve bore 24, such to form a seal. Further, a second sealing element 260b of the plunger 26 may be adapted to cooperate with a second inner surface of the valve bore 26. The sealing elements 260a, 260b of the valve bore may be formed of any adequate elastic material, such as rubber. The sealing elements 260a, 260b may for example be provided in form of a flat ring or an O-ring.

Although Figs 6a-6e illustrate one possible embodiment of providing a seal between the plunger 26 and valve bore 24, when in a closed position of the valve device 20, it is understood that other alternatives are also possible.

For example, in similar to what has been described above in relation to Figs 4c-4d, the valve bore 24 may comprise at least one sealing element, such as for example a soft sealing element. The sealing element of the valve bore may be formed of any adequate elastic material, such as rubber. The sealing element may for example be provided in form of a flat ring or an O-ring. The sealing element of the valve bore may be at least partly arranged in the asymmetrical recess 246. Thus, a sealing element of the valve bore 24, preferably arranged at the asymmetrical recess 246, may be adapted to cooperate with an exterior surface of the plunger 26, such to form a seal.

Further, as illustrated in Figs 6a-6e, the valve device 20 may further comprise an actuator 2000. The actuator 2000 may be an electronically controlled linear actuator. Further, a translator may be provided. Said translator may be aligned along the axial extent of the valve bore. The translator may be operably connected to the actuator and the plunger. A movement of the translator along the axial direction may thereby generate a movement of the plunger along the axial direction.

Figs 6a-6c illustrate an opening phase of the second fluid opening 22. The opening phase of the second fluid opening 22 may be performed in the same way or essentially the same way as described above in relation to the second fluid opening 12. Thus, each of Figs 6a-6e illustrate different axial positions of the plunger 26 within the valve bore 24.

Fig. 6a can be seen to illustrate a first axial position of the plunger 26. Fig. 6a discloses a position of the plunger 26 wherein the second fluid opening 22 is closed. Thus, in the position as illustrated in Fig. 6a, the first and second sealing portions 261, 241 can be seen to engage such to form a seal extending 360° as seen in a perimeter direction of the valve bore 24. Thus, the sealing element 260a can be seen to engage with an inner surface of the valve bore 24 such to form a 360°-seal.

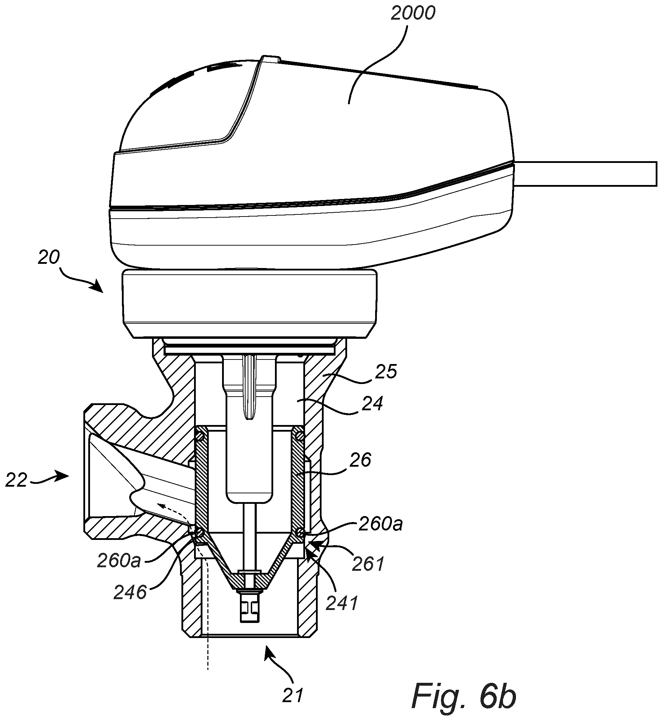

Fig. 6b illustrates an intermediate position of the plunger 26, wherein the sealing element 260a can be seen to partially engage with an inner surface of the valve bore 24, more specifically at the asymmetrical recess 246. Thus, the first and second sealing portions 261, 241 can be seen to partially engage, such to form a seal extending less than 360° and more than 0°, as seen in a perimeter direction of the valve bore 24.

Fig. 6c can be seen to illustrate a position of the plunger 26 wherein the first and second sealing portions 261, 241 are completely disengaged. The second fluid opening 22 can be seen to be partially open. The flow is not illustrated in Fig. 6c. However, it is understood that a fluid can be allowed to flow around the plunger and through the second fluid opening 22.

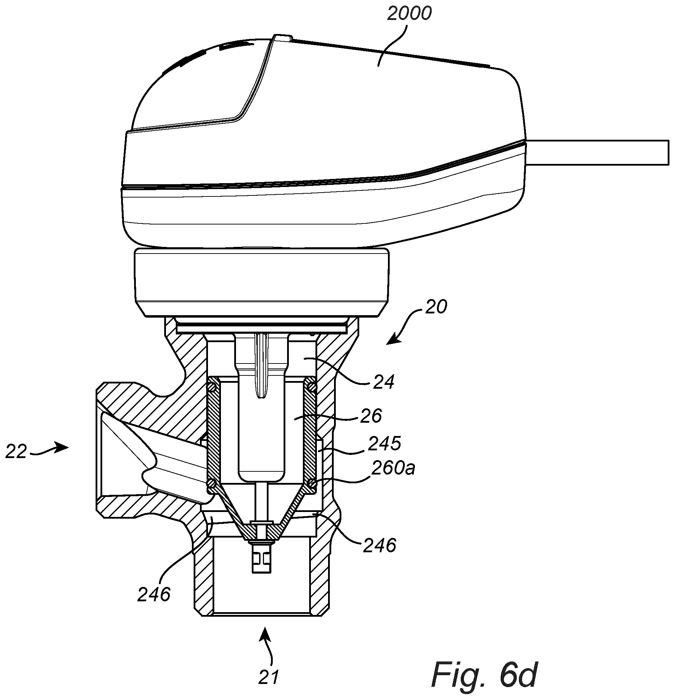

Fig. 6d illustrates a position of the plunger 26 wherein the second fluid opening 22 is partially open. In the position as illustrated in Fig. 6d, the first and second sealing portions 261, 241 can also be seen to be completely disengaged from one another. I.e. the sealing element 260a can be seen to be completely disengaged from the inner surface of the valve bore. The flow is not illustrated in Fig. 6d. However, it is understood that a fluid can be allowed to flow around the plunger and through the second fluid opening 22.

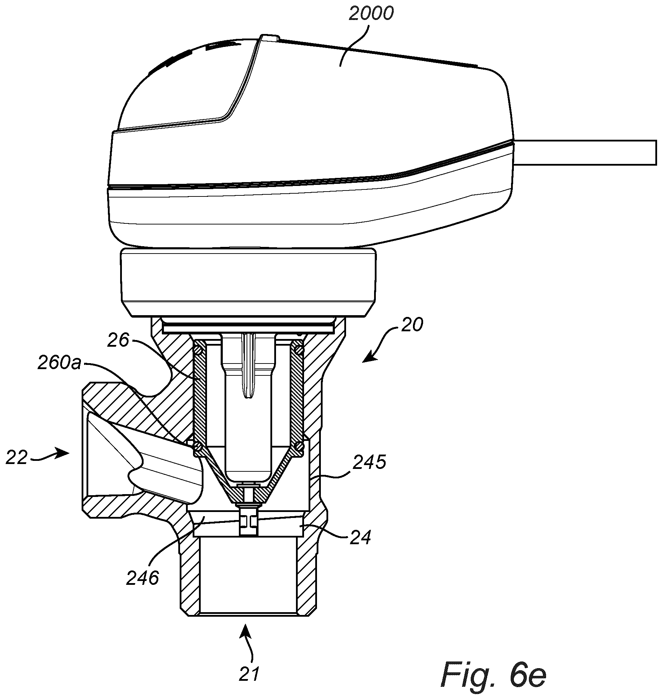

Fig. 6e illustrates a position of the plunger 26 wherein the second fluid opening 22 is nearly fully open. In the position as illustrated in Fig. 6e, the first and second sealing portions 261, 241 can also be seen to be disengaged from one another. The flow is not illustrated in Fig. 6e. However, it is understood that a fluid can be allowed to flow around the plunger and through the second fluid opening 22.

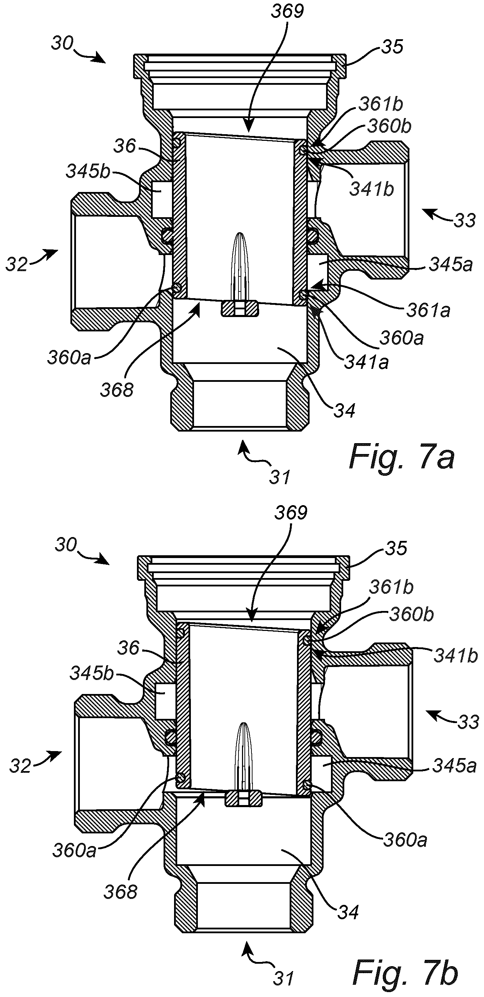

Figs 7a-7d illustrate yet another group of embodiments of a valve device 30. The valve device 30 may be designed and/or configured essentially the same as described above in relation to Figs 1-4, unless stated otherwise. Thus, in similar to what has been described in relation to Figs 1-4, the valve device 30 can comprise a first fluid opening 31, a second fluid opening 32 and a third fluid opening 33. Further, the valve device 30 comprises a housing 35. Further, the valve device 30 comprises a valve bore 34. The valve bore 34 may comprise at least one fluid opening recess 345a, 345b. The design of the valve bore 34 may be essentially the same as described above in relation to Figs 1-4. Alternatively, the design of the valve bore 34 may differ. For example, as illustrated in Figs 7a-7d, the valve bore 34 may be formed without any asymmetrical recess. The valve bore 34 may instead be provided with a symmetrical recess.

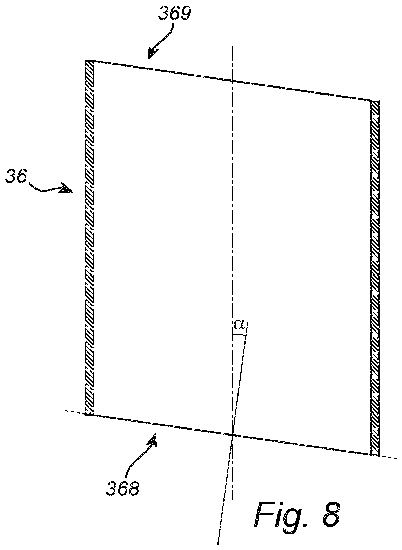

Further, as illustrated in Figs 7a-7d, the valve device 30 comprises a plunger 36. As illustrated in Figs 7a-7d, the design of the plunger 36 may differ as compared to what has been described in relation of Figs 1-4 in that the plunger 36 is provided with at least one oblique end. The plunger 36 may extend between a first end 368 and a second axially spaced apart end 369 of the plunger. As illustrated in Figs 7a-7d, both ends 368, 369 of the plunger may be oblique ends. However, although not illustrated, it is understood that only the first end 368 may be oblique, or alternatively, only the second end 369 may be oblique. The end 368, 369 may be oblique in the sense that a normal vector to a plane that coincides with said end presents an angle $\alpha$ in relation to the axial direction, see for example Fig. 8. Thus, a plane that coincides with said oblique end may have a normal vector that presents an angle $\alpha$ in relation to the axial direction. The angle $\alpha$ may be 0.5-40° or 1-35°, preferably 2-30°, more preferably 3-25°, 4-20°, 5-15° or 2-10°. Consequently, the plunger 36 may substantially have the form of a cylinder, in particular a right cylinder, wherein at least one base of the cylinder has been cut off by an intersecting plane. The intersecting plane can be seen as non-parallell to said base. The intersecting plane can have a normal vector that presents said angle $\alpha$ in relation to the axial direction. Thus, the plunger 36 may substantially have the shape of a truncated cylinder. Further, at least one end 368, 369 of the plunger 36 may be open. Consequently, a fluid can be allowed to flow between an interior and an exterior side of the plunger. A fluid may be allowed to flow inside of the plunger.

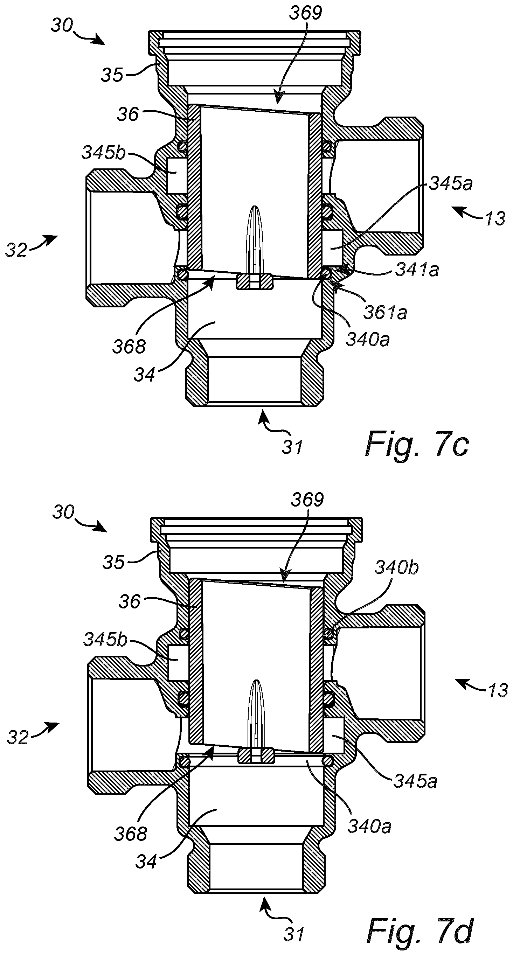

Further, in similar to what has been described in relation to Figs 3-4, the plunger 36 may comprise at least one first sealing portion 361a, 361b. The valve bore 34 may comprise at least one second sealing portion 341a, 341b. The sealing portions may be provided in accordance with what has been described in relation to Figs 3-4. Thus, in similar to what has been described in relation to Figs 3a-3f and Figs 4a-4b, the at least one first sealing portion 361a, 361b of the plunger 36 may be provided by a sealing element 360a, 360b, see Figs 7a-7b. Alternatively, in similar to what has been described in relation to Figs 4c-4d, the valve bore 34 may comprise at least one sealing element 340a, 340b, see Figs 7c-7d. The at least one sealing element 340a, 340b may be provided at a respective inner surface of the valve bore 34. For example, at least one sealing element 340a, 340b may be provided at a recess, such as a symmetrical recess, of the valve bore 34.

Fig. 7a and Fig. 7c illustrate a position of the plunger 36, wherein the first and second sealing portions 341a, 361a are partially disengaged. Fig. 7b and Fig. 7d illustrate a position of the plunger 36, wherein the first and second sealing portions 341a, 361a are completely disengaged.

Although Figs 7a-7d illustrate a valve device with three openings, it is understood that as an alternative, the valve device may comprise more than three openings, or only two openings, in similar to Figs 5-6. Thus, according to one alternative, the valve device as described in relation to Figs 5-6 may be provided with a plunger as illustrated in Figs 7a-7d. In such case, the valve bore may be provided without an asymmetrical recess.

A valve device as described above in relation to any one of Figs 1-8 may be used for diverting, mixing and/or controlling a fluid flowing in a system, such as a heating and/or cooling system. For example, the valve device may be used as a diverting valve or a mixing valve.

**Claims**

1. A valve device (10, 20, 30) comprising:

   a valve housing (15, 25, 35)
   a first fluid opening (11, 21, 31),

an additional fluid opening (12, 13, 22, 32, 33), a valve bore (14, 24, 34) having an axial extent (A1) along an axial direction, and a plunger (16, 26, 36) disposed within the valve bore (14, 24, 34) and movable along the axial direction,

wherein the plunger (16, 26, 36) is movable at least between a first position and a second position, wherein in the first position the additional fluid opening (12, 13, 22, 32, 33) is closed, wherein in the second position the additional fluid opening (12, 13, 22, 32, 33) is open, wherein the plunger (16, 26, 36) comprises a first sealing portion (161a, 161b, 261, 361) and the valve bore (14, 24, 34) comprises a second sealing portion (141a, 141b, 241, 341),

wherein in the first position, the first and second sealing portions engage such to form a seal extending 360° as seen in a perimeter direction of the valve bore (14, 24, 34),

wherein in the second position, the first and second sealing portions are completely disengaged,

wherein the valve device (10, 20, 30) is configured to, during an opening phase of the additional fluid opening, during which the plunger (16, 26, 36) is moved from the first position, along the axial direction, in a direction towards the second position, gradually disengage the first and second sealing portions.

2. The valve device (10, 20, 30) according to claim 1, wherein one of said first and second sealing portions is provided by a sealing element (160a, 160b, 260, 360, 140, 340), preferably a soft sealing element.

3. The valve device (10, 20, 30) according to claim 1 or 2, wherein the first sealing portion (161a, 161b, 261, 361) is provided at an end portion of the plunger (16, 26, 36).

4. The valve device (10, 20) according to any one of claims 1-3, wherein the valve bore (14, 24) comprises at least one asymmetrical recess (146a, 146b, 246) extending 180-360° as seen in a perimeter direction of the valve bore (14, 24), preferably 225-360°, 270-360° or 315-360°, more preferably 330-360°, 340-360° or 350-360° as seen in a perimeter direction of the valve bore.

5. The valve device (10, 20) according to claim 4, wherein the at least one asymmetrical recess (146a, 146b, 246) comprises said second sealing portion (141a, 141b, 241, 341), or wherein the second sealing portion (141a, 141b, 241, 341) comprises said at least one asymmetrical recess (146a, 146b, 246).

6. The valve device according to claim 4 or 5, wherein the asymmetrical recess (146a, 146b, 246) is provided as a recess having an axial extent, as seen in the axial direction, wherein the axial extent of the asymmetrical recess (146a, 146b, 246) varies along the perimeter direction.

7. The valve device according to any one of claims 4-6, wherein the asymmetrical recess (146a, 146b, 246) have a radial extent that varies along the perimeter direction.

8. The valve device according to any one of claims 4-7, wherein the asymmetrical recess (146a, 146b, 246) comprises at least a first portion (1461a, 1461b, 2461) presenting a first axial extent, as seen in the axial direction, and a second portion (1462a, 1462b, 2462) presenting a second axial extent, as seen in the axial direction, wherein the first portion (1461a, 1461b, 2461) of the asymmetrical recess (146a, 146b, 246) is arranged closer to the additional fluid opening (12, 13, 22) than the second portion (1462a, 1462b, 2462) of the asymmetrical recess (146a, 146b, 246), and wherein the first axial extent of the first portion is greater than the second axial extent of the second portion.

9. The valve device according to any one of claims 4-8, wherein a largest axial extent of the asymmetrical recess (146a, 146b, 246) is at least 1.1 times as large as a smallest axial extent of the asymmetrical recess (146a, 146b, 246), preferably at least 1.3, at least 1.5 or at least 1.7 times as large.

10. The valve device (30) according to any one of claims 1-3, wherein the plunger (36) comprises at least one oblique end (368, 369).

11. The valve device (30) according to claim 10, wherein a plane that coincides with said oblique end (368, 369) have a normal vector that presents an angle ($\alpha$) in relation to the axial direction.

12. The valve device (30) according to claim 11, wherein the angle ($\alpha$) is 0.5-40° or 1-35°, preferably 2-30°, more preferably 3-25°, 4-20°, 5-15° or 2-10°.

13. The valve device (10, 20, 30) according to any one of the preceding claims, wherein the valve bore (14, 24, 34) comprises at least one fluid opening recess (145a, 145b, 245, 345a, 345b) extending 360° as seen in a perimeter direction of the valve bore (14, 24, 34).

14. The valve device according to any one of claims 4-9, wherein the valve bore (14, 24) comprises at least one fluid opening recess (145a, 145b, 245) extending 360° as seen in a perimeter direction of the valve bore (14, 24), and

wherein the asymmetrical recess (146a, 146b, 246) merges with the fluid opening recess (145a, 145b, 245).

15. The valve device according to any one of the preceding claims, comprising a second fluid opening (12, 32) and a third fluid opening (13, 33), wherein the plunger (16, 26, 36), while being axially situated in a fluid flow preventing position being a position between a first and a second end plunger position, prevents a fluid to flow in a first flow path and in a second flow path, wherein the first flow path is a flow path between the first fluid opening (11, 31) and the second fluid opening (12, 32), and wherein the second flow path is a flow path between the first fluid opening (11, 31) and the third fluid opening (13, 33).

16. A valve device (10, 20) comprising:

a valve housing (15, 25)
a first fluid opening (11, 21),
an additional fluid opening (12, 13, 22),
a valve bore (14, 24) having an axial extent (A1) along an axial direction, and
a plunger (16, 26) disposed within the valve bore (14, 24) and movable along the axial direction, wherein the valve bore (14, 24) comprises at least one asymmetrical recess (146a, 146b, 246) extending 180-360° as seen in a perimeter direction of the valve bore (14, 24), preferably 225-360°, 270-360° or 315-360°, more preferably 330-360°, 340-360° or 350-360° as seen in a perimeter direction of the valve bore.

17. A valve device (30) comprising:

a valve housing (35)
a first fluid opening (31),
an additional fluid opening (32, 33),
a valve bore (34) having an axial extent (A1) along an axial direction, and
a plunger (36) disposed within the valve bore (34) and movable along the axial direction, wherein the plunger (36) comprises at least one oblique end (368, 369).

18. Use of the valve device (10, 20, 30) according to any one of claims 1-17 for diverting, mixing, and/or controlling a fluid flowing in a heating and/or cooling system.

*Fig. 1*

Fig. 2

Fig. 3a

Fig. 3b

Fig. 3c

Fig. 3d

Fig. 3e

Fig. 3f

Fig. 4a

Fig. 4b

*Fig. 4c*

*Fig. 4d*

Fig. 5

2000

20

25

24

260b

22

26

260a

241

260a

261    21

*Fig. 6a*

Fig. 6b

2000

20

25

24

26

260a

22

246

21

*Fig. 6c*

Fig. 6d

Fig. 6e

Fig. 7a

Fig. 7b

Fig. 7c

Fig. 7d

*Fig. 8*

| | Europäisches Patentamt<br>European Patent Office<br>Office européen des brevets | **EUROPEAN SEARCH REPORT** | **Application Number**<br>EP 24 22 2440 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X<br><br>A | EP 4 155 588 A1 (ESBE AB [SE])<br>29 March 2023 (2023-03-29)<br>* figures 1A, 2A, 2B, 2D *<br>* paragraph [0001] *<br>* paragraph [0039] - paragraph [0040] *<br>----- | 1-9,<br>13-16,18<br>10-12,17 | INV.<br>F16K3/26<br>F16K3/314<br>F16K3/32<br>F16K3/34<br>F16K11/07 |
| X<br><br>A | EP 2 535 622 A1 (DELPHI TECH HOLDING SARL<br>[LU]) 19 December 2012 (2012-12-19)<br>* figures 1, 2, 4 *<br>----- | 1,3,<br>10-13,<br>15,17<br>2,4-9,<br>14,16,18 | F16K27/04<br>F16K31/02<br>F16K3/24 |
| X<br><br>A | DE 10 2022 107763 A1 (THOMAS MAGNETE GMBH<br>[DE]) 5 October 2023 (2023-10-05)<br>* figures 1-3, 5, 6 *<br>* paragraph [0001] *<br>----- | 1-3,13,<br>15,18<br>4-12,14,<br>16,17 | |

**TECHNICAL FIELDS<br>SEARCHED      (IPC)**

F16K

The present search report has been drawn up for all claims

| Place of search | Date of completion of the search | Examiner |
|---|---|---|
| The Hague | 26 May 2025 | Silea, Cristian |

EPO FORM 1503 03.82 (P04C01)

## ANNEX TO THE EUROPEAN SEARCH REPORT
## ON EUROPEAN PATENT APPLICATION NO.

EP 24 22 2440

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2025

| Patent document cited in search report | | Publication date | Patent family member(s) | | Publication date |
|---|---|---|---|---|---|
| EP 4155588 | A1 | 29-03-2023 | CN | 117980637 A | 03-05-2024 |
| | | | EP | 4155588 A1 | 29-03-2023 |
| | | | JP | 2024535382 A | 30-09-2024 |
| | | | KR | 20240060848 A | 08-05-2024 |
| | | | WO | 2023052265 A1 | 06-04-2023 |
| EP 2535622 | A1 | 19-12-2012 | CN | 103597260 A | 19-02-2014 |
| | | | EP | 2535622 A1 | 19-12-2012 |
| | | | JP | 2014518345 A | 28-07-2014 |
| | | | KR | 20140022457 A | 24-02-2014 |
| | | | US | 2014203204 A1 | 24-07-2014 |
| | | | WO | 2012171950 A1 | 20-12-2012 |
| DE 102022107763 A1 | | 05-10-2023 | NONE | | |

EPO FORM P0459

For more details about this annex : see Official Journal of the European Patent Office, No. 12/82

**REFERENCES CITED IN THE DESCRIPTION**

**Patent documents cited in the description**

- EP 4202270 A